# EUROPÄISCHE PATENTANMELDUNG

(11) **EP 4 601 135 A1**
(43) Veröffentlichungstag der Anmeldung: **13.08.2025**
(21) Anmeldenummer: 25156396.1
(22) Anmeldetag: 06.02.2025
(51) Int. Cl.: H02G 3/04, B60L 53/31, H02G 11/00

(54) **KRAG-VORRICHTUNG FÜR EINE LADESTATION, GEHÄUSE-ANORDNUNG MIT EINER SOLCHEN KRAG-VORRICHTUNG UND LADESTATIONS-ANORDNUNG MIT EINER SOLCHEN KRAG-VORRICHTUNG**

(30) Priorität: 09.02.2024 DE 102024103763
(71) Anmelder: ads-tec Energy GmbH, 72622 Nürtingen (DE)
(72) Erfinder: SPEIDEL, Thomas, 71706 Markgröningen (DE); MOLCHANOV, Roman, 72654 Neckartenzlingen (DE)
(74) Vertreter: Gleiss Große Schrell und Partner mbB

(57) **Zusammenfassung**

Die Erfindung betrifft eine Krag-Vorrichtung (1) für eine Ladestation (3) mit mindestens einem Träger (11, 11.1, 11.2, 11.3, 11.4), wobei
- der mindestens eine Träger (11, 11.1, 11.2, 11.3, 11.4) einen starren Grundkörper mit einem ersten Ende und einem dem ersten Ende entlang einer Längserstreckung (17) des mindestens eine Trägers (11, 11.1, 11.2, 11.3, 11.4) gegenüberliegenden zweiten Ende aufweist, wobei
- die Krag-Vorrichtung (1) eine erste Befestigungsvorrichtung (13, 13.1, 13.2, 13.3, 13.4) zur starren Befestigung des ersten Endes des mindestens einen Trägers (11, 11.1, 11.2, 11.3, 11.4) an der Ladestation (3) aufweist, wobei
- die Krag-Vorrichtung (1) mindestens eine weitere Befestigungsvorrichtung (23, 23.1, 23.2, 29, 29.1, 29.2, 29.3, 29.4) zur beweglichen Befestigung mindestens einer Ladekabel-Aufnahme (19, 19.1, 19.2) und/oder mindestens eines Dachelements (21, 21.1, 21.2, 21.3, 21.4) aufweist.

## Beschreibung

Die Erfindung betrifft eine Krag-Vorrichtung für eine Ladestation, eine Gehäuse-Anordnung mit einer solchen Krag-Vorrichtung und eine Ladestations-Anordnung mit einer solchen Krag-Vorrichtung.

Ladestationen, insbesondere Schnellladestationen für Kraftfahrzeuge, welche einen elektrischen Antrieb aufweisen, gewinnen zunehmend an Bedeutung. Die Benutzung einer solchen Ladestation soll für den Benutzer möglichst einfach und komfortabel sein. Bei bekannten Ladestationen ist die Länge eines Ladekabels derart gewählt, dass das Ladekabel bei einer Nichtbenutzung - wenn ein Ladestecker des Ladekabels in der Ladestation steckt - nicht den Boden berührt, wo die Ladestation aufgestellt ist. Damit wird eine Verschmutzung und/oder Beschädigung des Ladekabels durch den Boden verhindert. Weiterhin wird verhindert, dass ein Kraftfahrzeug über das Ladekabel fährt und/oder darauf parkt. Nachteilig daran ist, dass aufgrund der daraus resultierenden beschränkten Länge des Ladekabels ein Aktionsradius der Ladestation, insbesondere ein Abstand zwischen einer Ladebuchse des zu ladenden Kraftfahrzeugs und der Ladestation, beschränkt ist. Damit ist es bei den bekannten Ladestationen notwendig, das Kraftfahrzeug relativ zu der Ladestation exakt zu parken oder schräg einzuparken, wenn die Ladebuchse auf einer der Ladestation abgewandten Seite des Kraftfahrzeugs angeordnet ist, da sonst der Ladestecker nicht in die Ladebuchse eingesteckt werden kann.

Weiterhin sind Ladestationen mit Ladearmen bekannt, wobei die Ladearme über eine Klappvorrichtung relativ zu einem Gehäuse der Ladestation schwenkbar sind. Nachteilig daran ist, dass diese Ladearme mit der Klappvorrichtung konstruktiv aufwändig gestaltet sind. Weiterhin weist die Klappvorrichtung typischerweise eine Rückstellvorrichtung auf, die den Ladearm mittels einer Rückstellkraft bei einer Nichtbenutzung in eine Ruhestellung drängt. Nachteilig daran ist, dass ein Benutzer Kraft aufbringen muss, um den Ladearm zu schwenken und das Ladekabel mit einem zu ladenden Kraftfahrzeug zu verbinden. Weiterhin übt die Rückstellkraft eine Zugkraft auf das Ladekabel aus, wenn das Ladekabel mit dem zu ladenden Kraftfahrzeug verbunden ist.

Der Erfindung liegt daher die Aufgabe zugrunde, eine Krag-Vorrichtung für eine Ladestation, eine Gehäuse-Anordnung mit einer solchen Krag-Vorrichtung und eine Ladestations-Anordnung mit einer solchen Krag-Vorrichtung zu schaffen, wobei die genannten Nachteile zumindest teilweise behoben, vorzugsweise vermieden sind.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gelöst, indem eine Krag-Vorrichtung für eine Ladestation mit mindestens einem Träger geschaffen wird. Der mindestens eine Träger weist einen starren Grundkörper mit einem ersten Ende und einem dem ersten Ende entlang einer Längserstreckung des Trägers gegenüberliegenden zweiten Ende auf. Weiterhin weist die Krag-Vorrichtung eine erste Befestigungsvorrichtung zur starren Befestigung des ersten Endes des mindestens einen Trägers an der Ladestation auf. Zusätzlich weist die Krag-Vorrichtung mindestens eine weitere Befestigungsvorrichtung zur beweglichen Befestigung mindestens einer Ladekabel-Aufnahme und/oder mindestens eines Dachelements auf. Vorteilhafterweise wird damit eine nachrüstbare Krag-Vorrichtung für eine bestehende Ladestation bereitgestellt. Weiterhin ist die Krag-Vorrichtung durch die Bereitstellung der weiteren Befestigungsvorrichtung flexibel an einen Einsatzzweck - die Führung eines Ladekabel und/oder die Überdachung der Ladestation - anpassbar. Weiterhin kann die Krag-Vorrichtung durch die modulare Ausgestaltung individuell an einen Kundenwunsch angepasst werden.

Insbesondere ragt der mindestens eine Träger im bestimmungsgemäß befestigten Zustand über eine Geometrie der Ladestation, insbesondere über die Abmessungen des Gehäuses der Ladestation, hinaus, vorzugsweise in allen drei Raumdimensionen. Somit bildet der mindestens eine Träger der Kragvorrichtung im Kontext der vorliegenden technischen Lehre insbesondere einen Ausleger.

In einer Ausgestaltung sind der mindestens eine Träger und die erste Befestigungsvorrichtung mehrteilig ausgebildet. Zusätzlich sind der mindestens eine Träger und die mindestens eine weitere Befestigungsvorrichtung mehrteilig ausgebildet.

In einer weiteren Ausgestaltung sind der mindestens eine Träger und die erste Befestigungsvorrichtung einteilig ausgebildet. Vorzugsweise sind der mindestens eine Träger und die erste Befestigungsvorrichtung materialeinheitlich ausgebildet. Weiterhin sind insbesondere der mindestens eine Träger und die mindestens eine weitere Befestigungsvorrichtung mehrteilig ausgebildet.

In einer weiteren Ausgestaltung sind der mindestens eine Träger und die mindestens eine weitere Befestigungsvorrichtung einteilig ausgebildet. Vorzugsweise sind der mindestens eine Träger und die mindestens eine weitere Befestigungsvorrichtung materialeinheitlich ausgebildet. Weiterhin sind insbesondere der mindestens eine Träger und die erste Befestigungsvorrichtung mehrteilig ausgebildet.

In einer weiteren Ausgestaltung sind der mindestens eine Träger, die erste Befestigungsvorrichtung und die mindestens eine weitere Befestigungsvorrichtung einteilig ausgebildet. Vorzugsweise sind der mindestens eine Träger, die erste Befestigungsvorrichtung und die mindestens eine weitere Befestigungsvorrichtung materialeinheitlich ausgebildet.

In einer bevorzugten Ausgestaltung ist die mindestens eine erste Befestigungsvorrichtung ein Gusselement. Alternativ oder zusätzlich ist die mindestens eine erste Befestigungsvorrichtung im bestimmungsgemäß befestigten Zustand mit der Ladestation, insbesondere einem Dachverkleidungselement der Ladestation, verschraubt. Alternativ oder zusätzlich weist das mindestens eine erste Befestigungselement mindestens ein Kopplungselement auf, wobei das mindestens eine Kopplungselement zur Aufnahme des mindestens einen Trägers ausgebildet ist.

Vorzugsweise weist die Krag-Vorrichtung genau einen Träger auf. Alternativ weist die Krag-Vorrichtung genau zwei Träger auf. Alternativ weist die Krag-Vorrichtung genau drei Träger auf. Alternativ weist die Krag-Vorrichtung genau vier Träger auf. Insbesondere ist die Anzahl der ersten Befestigungsvorrichtungen größer als oder gleich groß wie die Anzahl der Träger.

Gemäß einer Weiterbildung der Erfindung ist vorgesehen, dass die Krag-Vorrichtung mindestens eine Ladekabel-Aufnahme aufweist. Dabei ist die mindestens eine weitere Befestigungsvorrichtung eine zweite Befestigungsvorrichtung zur beweglichen Befestigung der mindestens einen Ladekabel-Aufnahme. Vorteilhafterweise ist die mindestens eine Ladekabel-Aufnahme eingerichtet, um ein Ladekabel der Ladestation zumindest bereichsweise aufzunehmen und/oder zumindest bereichsweise zu führen. Vorteilhafterweise wird mittels der mindestens einen Ladekabel-Aufnahme und dem mindestens einen Träger ein Aktionsradius des mindestens einen Ladekabels vergrößert. Insbesondere wird das mindestens eine Ladekabel mittels der mindestens einen Ladekabel-Aufnahme in einer erhöhten Position zu einem zu ladenden Kraftfahrzeug geführt, sodass das mindestens eine Ladekabel, insbesondere ein Ladestecker des mindestens einen Ladekabels, in einfacher Weise an dem zu ladenden Kraftfahrzeugs - insbesondere in einer Ladebuchse des Kraftfahrzeugs - angeordnet werden kann. Darüber hinaus erhöht sich aufgrund des vergrößerten Aktionsradius die Anzahl an möglicher Parkpositionen zum Laden des zu ladenden Kraftfahrzeugs an der Ladestation.

In einer bevorzugten Ausgestaltung sind die mindestens eine Ladekabel-Aufnahme und die zweite Befestigungsvorrichtung derart aufeinander abgestimmt, dass die mindestens eine Ladekabel-Aufnahme um mindestens eine Drehachse drehbar in der Befestigungsvorrichtung gelagert ist. Besonders bevorzugt bilden die zweite Befestigungsvorrichtung und ein Verbindungselement der mindestens einen Ladekabelaufnahme ein Kugelgelenk, sodass die die mindestens eine Ladekabel-Aufnahme dreiachsig drehbar in der Befestigungsvorrichtung gelagert ist.

In einer Ausgestaltung ist die zweite Befestigungsvorrichtung derart ausgebildet, insbesondere als Nut und/oder Schiene, dass die mindestens eine Ladekabel-Aufnahme in einer ersten Translationsrichtung verlagerbar ist. Vorzugsweise ist die erste Translationsrichtung identisch zu der Längserstreckung des mindestens einen Trägers.

Gemäß einer Weiterbildung der Erfindung ist vorgesehen, dass der mindestens eine Träger an dem zweiten Ende als die mindestens eine weitere Befestigungsvorrichtung eine dritte Befestigungsvorrichtung zur starren Befestigung einer Querstrebe aufweist. Insbesondere kann die mindestens die Querstrebe zur Befestigung des mindestens einen Dachelements oder der mindestens einen Ladekabel-Aufnahme genutzt werden. Vorteilhafterweise ist die Krag-Vorrichtung durch die dritte Befestigungsvorrichtung modular und in einfacher Weise erweiterbar.

In einer bevorzugten Ausgestaltung ist die mindestens eine dritte Befestigungsvorrichtung ein Gusselement. Alternativ oder zusätzlich weist das mindestens eine dritte Befestigungselement mindestens zwei Kopplungselemente auf, wobei ein erstes Kopplungselement der mindestens zwei Kopplungselemente zur Aufnahme des mindestens einen Trägers ausgebildet ist und wobei ein zweites Kopplungselement der mindestens zwei Kopplungselemente zur Aufnahme von mindestens einer Querstrebe ausgebildet ist. Besonders bevorzugt weist das mindestens eine dritte Befestigungselement drei Kopplungselemente auf, nämlich das erste Kopplungselement, ein erstes zweites Kopplungselement zur Aufnahme von einer ersten Querstrebe und ein zweites zweites Kopplungselement zur Aufnahme von einer zweiten Querstrebe.

Insbesondere sind der mindestens eine Träger und die dritte Befestigungsvorrichtung mehrteilig ausgebildet. Alternativ sind der mindestens eine Träger und die dritte Befestigungsvorrichtung einteilig ausgebildet. Vorzugsweise sind der mindestens eine Träger und die dritte Befestigungsvorrichtung materialeinheitlich ausgebildet.

In einer Ausgestaltung sind die zweite Befestigungsvorrichtung und die dritte Befestigungsvorrichtung einteilig ausgebildet. Somit ist an dem zweiten Ende des mindestens einen Trägers die zweite Befestigungsvorrichtung und die dritte Befestigungsvorrichtung angeordnet.

Gemäß einer Weiterbildung der Erfindung ist vorgesehen, dass der mindestens eine Träger zumindest bereichsweise als längliches Konstruktionsprofil, oder als U-Profil, oder als L-Profil, oder als T-Träger oder als Doppel-T-Träger ausgebildet ist. Vorteilhafterweise ist der mindestens eine Träger dadurch kostengünstig herstellbar.

In einer Ausgestaltung ist der mindestens eine Träger als Strangpressprofil ausgebildet.

Gemäß einer Weiterbildung der Erfindung ist vorgesehen, dass die Krag-Vorrichtung als den mindestens einen Träger einen ersten Träger und einen zweiten Träger aufweist, sowie außerdem mindestes eine Querstrebe. Die mindestens eine Querstrebe ist eingerichtet um einenends an einer ersten dritten Befestigungsvorrichtung, nämlich der dritten Befestigungsvorrichtung des ersten Trägers, und anderenends an einer zweiten dritten Befestigungsvorrichtung, nämlich der dritten Befestigungsvorrichtung des zweiten Trägers, befestigt zu werden. Vorteilhafterweise ist die Krag-Vorrichtung damit stabiler und steifer gegenüber auf die Krag-Vorrichtung wirkenden Kräften, insbesondere Wind und/oder Zugkräfte, die bei der Verlagerung des Ladekabels und/oder der mindestens einen Ladekabel-Aufnahme auftreten können, ausgebildet.

Besonders bevorzugt sind der erste Träger mittels einer ersten ersten Befestigungsvorrichtung starr an einer ersten Position der Ladestation befestigt. Zusätzlich ist der zweite Träger mittels einer zweiten ersten Befestigungsvorrichtung starr an einer zweiten, von der ersten Position verschiedenen Position der Ladestation befestigt.

Insbesondere sind sowohl der erste Träger als auch die mindestens eine Querstrebe vorzugsweise starr an der ersten dritten Befestigungsvorrichtung angeordnet, sodass der erste Träger und die mindestens eine Querstrebe über die erste dritte Befestigungsvorrichtung vorzugsweise starr miteinander verbunden sind. Alternativ oder zusätzlich sind sowohl der zweite Träger, als auch die mindestens eine Querstrebe vorzugsweise starr an der zweiten dritten Befestigungsvorrichtung angeordnet, sodass der zweite Träger und die mindestens eine Querstrebe über die zweite dritte Befestigungsvorrichtung vorzugsweise starr miteinander verbunden sind.

In einer Ausgestaltung sind die mindestens eine Querstrebe und die mindestens eine dritte Befestigungsvorrichtung, insbesondere die erste dritte Befestigungsvorrichtung und/oder die zweite dritte Befestigungsvorrichtung, mehrteilig ausgebildet. Alternativ sind die mindestens eine Querstrebe und die mindestens eine dritte Befestigungsvorrichtung, insbesondere die erste dritte Befestigungsvorrichtung und/oder die zweite dritte Befestigungsvorrichtung, einteilig ausgebildet. Vorzugsweise sind die mindestens eine Querstrebe und die mindestens eine dritte Befestigungsvorrichtung, insbesondere die erste dritte Befestigungsvorrichtung und/oder die zweite dritte Befestigungsvorrichtung, materialeinheitlich ausgebildet.

In einer weiteren Ausgestaltung sind der erste Träger, der zweite Träger, die mindestes eine Querstrebe, die erste dritte Befestigungsvorrichtung und die zweite dritte Befestigungsvorrichtung mehrteilig ausgebildet. Alternativ sind der erste Träger, der zweite Träger, die mindestes eine Querstrebe, die erste dritte Befestigungsvorrichtung und die die zweite dritte Befestigungsvorrichtung einteilig ausgebildet.

Gemäß einer Weiterbildung der Erfindung ist die mindestens eine weitere Befestigungsvorrichtung an dem mindestens einen Träger angeordnet.

Insbesondere ist die zweite Befestigungsvorrichtung an dem zweiten Ende des mindestens einen Trägers angeordnet. Alternativ oder zusätzlich ist die zweite Befestigungsvorrichtung an dem mindestens einen Träger zwischen dem ersten Ende und dem zweite Ende angeordnet, wobei die zweite Befestigungsvorrichtung besonders bevorzugt im bestimmungsgemäß befestigten Zustand an einer nach geodätisch unten weisenden Oberfläche des mindestens einen Trägers angeordnet ist.

In einer Ausgestaltung sind der mindestens eine Träger und die zweite Befestigungsvorrichtung mehrteilig ausgebildet. Alternativ sind der mindestens eine Träger und die zweite Befestigungsvorrichtung einteilig ausgebildet. Vorzugsweise sind der mindestens eine Träger und die zweite Befestigungsvorrichtung materialeinheitlich ausgebildet.

Insbesondere ist die zweite Befestigungsvorrichtung an dem ersten Träger oder dem zweiten Träger angeordnet. Vorzugsweise ist eine erste zweite Befestigungsvorrichtung an dem ersten Träger angeordnet. Alternativ oder zusätzlich ist eine zweite zweite Befestigungsvorrichtung an dem zweiten Träger angeordnet.

Gemäß einer Weiterbildung der Erfindung ist die mindestens eine weitere Befestigungsvorrichtung an der mindestens einen Querstrebe angeordnet.

Insbesondere ist die zweite Befestigungsvorrichtung an der mindestens einen Querstrebe angeordnet. Vorzugsweise ist die erste zweite Befestigungsvorrichtung an der mindestens einen Querstrebe angeordnet. Alternativ oder zusätzlich ist die zweite zweite Befestigungsvorrichtung an der mindestens einen Querstrebe angeordnet.

In einer Ausgestaltung sind die mindestens eine Querstrebe und die zweite Befestigungsvorrichtung, insbesondere die erste zweite Befestigungsvorrichtung und die zweite zweite Befestigungsvorrichtung, mehrteilig ausgebildet. Alternativ sind die mindestens eine Querstrebe und die zweite Befestigungsvorrichtung, insbesondere die erste zweite Befestigungsvorrichtung und die zweite zweite Befestigungsvorrichtung, einteilig ausgebildet. Vorzugsweise sind der mindestens eine Träger und die zweite Befestigungsvorrichtung, insbesondere die erste zweite Befestigungsvorrichtung und die zweite zweite Befestigungsvorrichtung, materialeinheitlich ausgebildet.

Insbesondere ist die zweite Befestigungsvorrichtung an der mindestens einen Querstrebe zwischen dem ersten Ende und dem zweiten Ende angeordnet, wobei die zweite Befestigungsvorrichtung besonders bevorzugt im bestimmungsgemäß befestigten Zustand an der nach geodätisch unten weisenden Oberfläche der mindestens einen Querstrebe angeordnet ist. Vorzugsweise ist die erste zweite Befestigungsvorrichtung und/oder die zweite zweite Befestigungsvorrichtung an der mindestens einen Querstrebe zwischen dem ersten Ende und dem zweiten Ende angeordnet, wobei die erste zweite Befestigungsvorrichtung und/oder die zweite zweite Befestigungsvorrichtung besonders bevorzugt im bestimmungsgemäß befestigten Zustand an der nach geodätisch unten weisenden Oberfläche der mindestens einen Querstrebe angeordnet ist.

Gemäß einer Weiterbildung der Erfindung ist vorgesehen, dass die mindestens eine Ladekabel-Aufnahme in einer Längserstreckung der mindestens einen Querstrebe verlagerbar an der mindestens einen Querstrebe angeordnet ist.

Insbesondere weist die Krag-Vorrichtung eine erste Ladekabel-Aufnahme und eine zweite Ladekabelaufnahme als die mindestens eine Ladekabel-Aufnahme auf, wobei die erste Ladekabel-Aufnahme in einem ersten Bereich in der Längserstreckung der mindestens einen Querstrebe verlagerbar an der mindestens einen Querstrebe angeordnet ist, und wobei die zweite Ladekabel-Aufnahme in einem zweiten, von dem ersten Bereich verschiedenen Bereich in der Längserstreckung der mindestens einen Querstrebe verlagerbar an der mindestens einen Querstrebe angeordnet ist.

Insbesondere ist die zweite Befestigungsvorrichtung derart ausgebildet, insbesondere als Nut und/oder Schiene, dass die mindestens eine Ladekabel-Aufnahme in der Längserstreckung der mindestens einen Querstrebe verlagerbar ist.

In einer Ausgestaltung ist die erste zweite Befestigungsvorrichtung derart ausgebildet, insbesondere als Nut und/oder Schiene, dass die erste Ladekabel-Aufnahme in der Längserstreckung der mindestens einen Querstrebe verlagerbar ist. Alternativ oder zusätzlich ist die zweite zweite Befestigungsvorrichtung derart ausgebildet, insbesondere als Nut und/oder Schiene, dass die zweite Ladekabel-Aufnahme in der Längserstreckung der mindestens einen Querstrebe verlagerbar ist.

Gemäß einer Weiterbildung der Erfindung weist die Krag-Vorrichtung zusätzlich mindestens ein Dachelement auf. Das mindestens eine Dachelement kann an mindestens einem Element, ausgewählt aus einer Gruppe, bestehend aus dem ersten Träger, dem zweiten Träger, der mindestens einen Querstrebe, und einer Kombination von mindestens zwei der genannten Elemente, befestigt werden. Weiterhin ist das mindestens eine Dachelement eingerichtet, um einen von den mindestens zwei Trägern und der mindestens einen Querstrebe begrenzten Bereich zumindest teilweise zu überdecken. Vorteilhafterweise dient das mindestens eine Dachelement in bestimmungsgemäß befestigten Zustand als Wetterschutz für einen Benutzer der Ladestation.

Insbesondere kann das mindestens eine Dachelement mittels einer vierten Befestigungsvorrichtung als der mindestens einen weiteren Befestigungsvorrichtung an dem mindestens einem Element, ausgewählt aus einer Gruppe, bestehend aus dem ersten Träger, dem zweiten Träger, der Querstrebe, und einer Kombination von mindestens zwei der genannten Elemente, befestigt werden.

In einer Ausgestaltung ist die vierte Befestigungsvorrichtung an dem ersten Träger angeordnet. Insbesondere sind der erste Träger und die vierte Befestigungsvorrichtung mehrteilig ausgebildet. Alternativ sind der erste Träger und die vierte Befestigungsvorrichtung einteilig ausgebildet. Vorzugsweise sind der erste Träger und die vierte Befestigungsvorrichtung materialeinheitlich ausgebildet.

In einer weiteren Ausgestaltung ist die vierte Befestigungsvorrichtung an dem zweiten Träger angeordnet. Insbesondere sind der zweite Träger und die vierte Befestigungsvorrichtung mehrteilig ausgebildet. Alternativ sind der zweite Träger und die vierte Befestigungsvorrichtung einteilig ausgebildet. Vorzugsweise sind der zweite Träger und die vierte Befestigungsvorrichtung materialeinheitlich ausgebildet.

In einer weiteren Ausgestaltung ist die vierte Befestigungsvorrichtung an der mindestens einen Querstrebe angeordnet. Insbesondere sind die mindestens einen Querstrebe und die vierte Befestigungsvorrichtung mehrteilig ausgebildet. Alternativ sind die mindestens einen Querstrebe und die vierte Befestigungsvorrichtung einteilig ausgebildet. Vorzugsweise sind die mindestens einen Querstrebe und die vierte Befestigungsvorrichtung materialeinheitlich ausgebildet.

In einer weiteren Ausgestaltung ist die vierte Befestigungsvorrichtung an der mindestens einen ersten Befestigungsvorrichtung angeordnet. Insbesondere sind die mindestens einen erste Befestigungsvorrichtung und die vierte Befestigungsvorrichtung mehrteilig ausgebildet. Alternativ sind die mindestens eine erste Befestigungsvorrichtung und die vierte Befestigungsvorrichtung einteilig ausgebildet. Vorzugsweise sind die mindestens eine erste Befestigungsvorrichtung und die vierte Befestigungsvorrichtung materialeinheitlich ausgebildet.

In einer weiteren Ausgestaltung ist die vierte Befestigungsvorrichtung an der mindestens einen dritten Befestigungsvorrichtung angeordnet. Insbesondere sind die mindestens einen dritte Befestigungsvorrichtung und die vierte Befestigungsvorrichtung mehrteilig ausgebildet. Alternativ sind die mindestens eine dritte Befestigungsvorrichtung und die vierte Befestigungsvorrichtung einteilig ausgebildet. Vorzugsweise sind die mindestens eine dritte Befestigungsvorrichtung und die vierte Befestigungsvorrichtung materialeinheitlich ausgebildet.

In einer bevorzugten Ausgestaltung ist eine erste vierte Befestigungsvorrichtung an dem ersten Träger angeordnet. Zusätzlich ist eine zweite vierte Befestigungsvorrichtung an dem zweiten Träger angeordnet. Zusätzlich ist eine dritte vierte Befestigungsvorrichtung an der mindestens einen Querstrebe angeordnet.

Gemäß einer Weiterbildung der Erfindung ist das mindestens einem Dachelement als Photovoltaikmodul ausgebildet. Vorteilhafterweise dient das mindestens eine Dachelement damit in bestimmungsgemäß befestigten Zustand als Energiebereitstellungsvorrichtung für die Ladestation, sodass ein Energiespeicher der Ladestation mit elektrischer Energie, die mittels des Photovoltaikmoduls aus Licht erhalten wird, geladen werden kann. Vorteilhafterweise wird damit eine CO₂-Bilanz der Ladestation verbessert, da eine Aufladung des Energiespeichers mit konventionell erzeugter elektrischer Energie verringert wird. Vorteilhaft kann außerdem die Standby-Leistungsaufnahme zumindest teilweise, vorzugsweise vollständig, mit von dem mindestens einen Photovoltaik-Modul generierter elektrischer Leistung gedeckt werden, was die CO₂-Bilanz weiter verbessert. Vorteilhafterweise erhöht das mindestens eine Photovoltaik-Modul die Dauer, insbesondere bei autarkem Betrieb, bis der Energiespeicher aufgrund der Standby-Leistungsaufnahme und ohne Ladevorgänge entleert ist.

Gemäß einer Weiterbildung der Erfindung ist vorgesehen, dass die Krag-Vorrichtung einen Grundrahmen aufweist, der eingerichtet ist, um in einem Kopfbereich einer Ladestation - vorzugsweise umlaufend - befestigt zu werden. Dabei weist der Grundrahmen die erste Befestigungsvorrichtung und mindestens eine Basisstrebe auf. Die mindestens eine Basisstrebe ist eingerichtet, um einenends an der ersten ersten Befestigungsvorrichtung zur Befestigung des ersten Trägers und anderenends an der zweiten ersten Befestigungsvorrichtung zur Befestigung des zweiten Trägers befestigt zu werden. Vorteilhafterweise wird damit die Stabilität und Steifigkeit der Krag-Vorrichtung weiter erhöht.

Die mindestens eine Basisstrebe ist insbesondere als Profilrohr, besonders bevorzugt als Vierkantrohr, ausgebildet. Insbesondere sind die Kanten des Vierkantrohrs abgerundet.

In einer Ausgestaltung ist die mindestens eine Basisstrebe eingerichtet, um an die erste erste Befestigungsvorrichtung und an die zweite erste Befestigungsvorrichtung angesteckt und verschraubt zu werden. Insbesondere ist dann das mindestens eine Kopplungselement der ersten ersten Befestigungsvorrichtung zur Aufnahme der mindestens einen Basisstrebe ausgebildet. Zusätzlich ist dann das mindestens eine Kopplungselement der zweiten ersten Befestigungsvorrichtung zur Aufnahme der mindestens einen Basisstrebe ausgebildet.

In einer bevorzugten Ausgestaltung weisen die ersten Befestigungsvorrichtungen mindestens zwei Kopplungselemente auf, wobei das erste Kopplungselement der mindestens zwei Kopplungselemente zur Aufnahme des Trägers und mindestens ein zweites Kopplungselement der mindestens zwei Kopplungselemente zur Aufnahme der mindestens einen Basisstrebe ausgebildet ist.

In einer weiteren Ausgestaltung - insbesondere für eine Ladestation mit einem viereckigen Kopfbereich - bilden vier erste Befestigungsvorrichtungen und vier Basisstreben den Grundrahmen. Dabei weist vorzugsweise jede erste Befestigungsvorrichtung mindestens zwei zweite Kopplungselemente zur Aufnahme von jeweils zwei Basisstreben auf.

Gemäß einer Weiterbildung der Erfindung ist vorgesehen, dass eine im bestimmungsgemäß befestigten Zustand nach geodätisch oben weisende Oberfläche der mindestens einen Ladekabel-Aufnahme zumindest bereichsweise als Sattelfläche ausgebildet ist. Damit wird eine punktförmige Auflage des Ladekabel auf der mindestens einen Ladekabel-Aufnahme verhindert, sodass ein Ladekabel knickfrei auf der Oberfläche angeordnet und reibungsarm relativ zu der mindestens einen Ladekabel-Aufnahme verlagert werden kann. Weiterhin ist eine Drehung und/oder Verlagerung der mindestens einen Ladekabel-Aufnahme mittels dem darin geführten Ladekabel aufgrund der Sattelfläche einfach und ohne ein Abknicken des Ladekabels möglich.

Typischer weist eine Sattelfläche einen idealen Pass auf. Das Ladekabel ist derart in der Ladekabel-Aufnahme angeordnet, dass das Ladekabel in der Ladekabel-Aufnahme dem idealen Pass der Sattelfläche folgt. Vorzugsweise weist der ideale Pass der Sattelfläche einen konstanten Krümmungsradius auf. Besonders bevorzugt ist die Ladekabel-Aufnahme derart auf ein Ladekabel abgestimmt, dass der konstante Krümmungsradius größer ist als oder gleich groß ist wie ein minimaler Biegeradius des Ladekabels.

Gemäß einer Weiterbildung der Erfindung ist vorgesehen, dass die mindestens einen Ladekabel-Aufnahme einen Ladekabel-Kanal ausbildet, wobei die mindestens einen Ladekabel-Aufnahme den Ladekabel-Kanal entlang einer eine Erstreckungsrichtung des Ladekabels umgreifenden Kabelumfangsrichtung des Ladekabels nicht vollständig umschließt. Insbesondere ist damit die mindestens eine Ladekabel-Aufnahme an einer Seite entlang der Erstreckungsrichtung des Ladekabels offen, sodass das Ladekabel einfach eingelegt werden kann.

Gemäß einer Weiterbildung der Erfindung ist vorgesehen, dass der mindestens eine Träger eine Trägerlänge von 80 cm bis 150 cm aufweist. Damit kann der Aktionsradius der Krag-Vorrichtung besonders vorteilhaft vergrößert werden ohne die Stabilität der Krag-Vorrichtung zu beeinträchtigen.

Vorzugsweise weist der mindestens eine Träger eine Trägerlänge von 100 cm bis 130 cm, besonders bevorzugt von 110 cm, auf.

Gemäß einer Weiterbildung der Erfindung weist die Krag-Vorrichtung mindestens eine Leuchtvorrichtung auf. Die mindestens eine Leuchtvorrichtung ist auf einer im bestimmungsgemäß montierten Zustand nach geodätisch unten weisenden Oberfläche des mindestens einen Trägers und/oder der mindestens einen Querstrebe angeordnet. Die Leuchtvorrichtung ist insbesondere derart an dem mindestens einen Trägers und/oder der mindestens einen Querstrebe angeordnet, dass von der Leuchtvorrichtung emittiertes Licht geodätisch nach unten abgestrahlt wird. Vorteilhafterweise ist es damit möglich, eine Umgebung der Ladestation zu beleuchten und damit zu jeder Tageszeit eine einfache Bedienung der Ladestation zu ermöglichen.

Die mindestens eine Leuchtvorrichtung ist insbesondere als ein LED-Leuchtband ausgebildet.

In einer Ausgestaltung weist die mindestens eine Leuchtvorrichtung einen Leuchtvorrichtungs-Energiespeicher auf, wobei der Leuchtvorrichtungs-Energiespeicher mit von dem mindestens einen Photovoltaikmodul generierter elektrischen Energie geladen werden kann.

Die Aufgabe wird auch gelöst, indem eine Gehäuse-Anordnung für eine Ladestation mit einem Gehäuse und einer erfindungsgemäßen Krag-Vorrichtung oder einer Krag-Vorrichtung nach einer oder mehreren der zuvor genannten Ausführungsformen geschaffen wird. Dabei ist der mindestens eine Träger über die erste Befestigungsvorrichtung starr an einem Verkleidungselement des Gehäuses befestigt. In Zusammenhang mit dem Gehäuse-Anordnung ergeben sich insbesondere die Vorteile, die bereits in Zusammenhang mit der Krag-Vorrichtung erläutert wurden.

In einer besonders bevorzugten Ausgestaltung ist die erste Befestigungsvorrichtung - und damit auch der mindestens eine Träger - in einem Bereich einer Ecke in einem Kopfbereich des Gehäuses angeordnet. Damit erstreckt sich der Träger ausgehend von der Ecke des Gehäuses von dem Gehäuse weg.

Insbesondere weist das Gehäuse ein Decken-Verkleidungselement und mindestens ein Seitenverkleidungselement auf, wobei die erste Befestigungsvorrichtung starr mit dem Decken-Verkleidungselement verbunden ist. In einer Ausgestaltung weist das Gehäuse mindestens vier Seitenverkleidungselemente, insbesondere genau vier Seitenverkleidungselemente, auf.

In einer Ausgestaltung umhüllt das Gehäuse bei dessen bestimmungsgemäßer Benutzung einen Innenraum einer Ladestation zumindest teilweise, insbesondere vollständig, wobei insbesondere eine Aufstellfläche - eine Unterseite - der Ladestation nicht von dem Gehäuse umhüllt wird.

Gemäß einer Weiterbildung der Erfindung ist vorgesehen, dass der mindestens eine Träger mit einer gedachten horizontalen Ebene einen Winkel von -30 ° bis 30 °, vorzugsweise 10 °, einschließt. Vorteilhafterweise kann damit das Ladekabel unabhängig von der Ladestation und individuell auf einer für die Benutzung der Ladestation vorteilhafte Höhe geführt werden, sodass eine komfortable Nutzung der Ladestation ermöglicht wird.

Insbesondere ist das Decken-Verkleidungselement im bestimmungsgemäßen Zustand zumindest bereichsweise parallel zu der horizontalen Ebene.

Im Kontext der vorliegenden technischen Lehre schließt der mindestens eine Träger mit der gedachten horizontalen Ebene insbesondere einen negativen Winkel ein, wenn der mindestens eine Träger im bestimmungsgemäß befestigten Zustand ausgehend von der ersten Befestigungsvorrichtung nach geodätisch unten zeigt. Weiterhin schließt der mindestens eine Träger mit der gedachten horizontalen Ebene insbesondere einen positiven Winkel ein, wenn der mindestens eine Träger im bestimmungsgemäß befestigten Zustand ausgehend von der ersten Befestigungsvorrichtung nach geodätisch oben zeigt.

Gemäß einer Weiterbildung der Erfindung ist vorgesehen, dass eine Träger-Lotrichtungs-Ebene und eine Seitenverkleidungselement-Ebene einen Winkel von 0 ° bis 180 °, vorzugsweise 135 °, einschließt.

Im Kontext der vorliegenden technischen Lehre ist die Träger-Lotrichtungs-Ebene insbesondere eine Ebene, die von der Längserstreckung des mindestens einen Trägers und der Lotrichtung aufgespannt wird.

Im Kontext der vorliegenden technischen Lehre ist die Seitenverkleidungselement-Ebene insbesondere eine Ebene, die von einem Seitenverkleidungselement des Gehäuses aufgespannt wird. Vorzugsweise ist das zur Bestimmung der Seitenverkleidungselement-Ebene Seitenverkleidungselement unmittelbar benachbart zu dem ersten Befestigungselement.

Die Aufgabe wird auch gelöst, indem eine Ladestations-Anordnung mit einer Ladestation und einer erfindungsgemäßen Krag-Vorrichtung oder einer Krag-Vorrichtung nach einer oder mehreren der zuvor genannten Ausführungsformen geschaffen wird. Alternativ weist die Ladestations-Anordnung die Ladestation und eine erfindungsgemäße Gehäuse-Anordnung oder eine Gehäuse-Anordnung nach einer oder mehreren der zuvor genannten Ausführungsformen auf. In Zusammenhang mit der Ladestations-Anordnung ergeben sich insbesondere die Vorteile, die bereits in Zusammenhang mit der Krag-Vorrichtung und der Gehäuse-Anordnung erläutert wurden.

Als Ladestation wird in der Elektrotechnik jedwede, insbesondere stationäre oder mobile, Vorrichtung oder elektrische Anlage bezeichnet, welche dazu dient, mobilen akkubetriebenen Geräten, Maschinen oder Kraftfahrzeugen durch einfaches Einstellen oder Einstecken Energie zuzuführen, ohne den Energiespeicher - etwa die Traktionsbatterie eines Elektroautos - zwangsläufig entnehmen zu müssen. Ladestationen für Elektroautos werden mitunter auch als "Stromtankstellen" bezeichnet und können mehrere Ladepunkte umfassen. Bekannt sind hier insbesondere Gleichstrom-Schnellladesysteme (high performance charging systems oder high power charging systems, HPC-Systeme) wie das in Europa verbreitete, sogenannte kombinierte Ladesystem (combined charging system, CCS). Beim gattungsmäßigen Gleichstromladen wird Gleichstrom aus der Ladestation direkt in die Batterie des Fahrzeugs eingespeist und hierzu durch einen leistungsstarken Gleichrichter, bevorzugt der Ladestation, vom Stromnetz oder durch große Pufferakkumulatoren an z.B. Solartankstellen bereitgestellt. Im Fahrzeug befindet sich ein Batteriemanagementsystem, das mit der Ladestation direkt oder indirekt kommuniziert, um die Stromstärke und -spannung anzupassen oder bei Erreichung einer vorbestimmten Kapazitätsgrenze den Vorgang zu beenden. Eine Leistungselektronik befindet sich hierbei üblicherweise in der Ladestation. Da die Gleichstromanschlüsse der Ladestation direkt - ohne Umweg über einen AC/DC-Wandler des Fahrzeugs - mit entsprechenden Anschlüssen der Traktionsbatterie verbunden werden, lassen sich verlustarm hohe Ladeströme übertragen, was kurze Ladezeiten ermöglicht.

In einer Ausführungsform ist die Ladestation als eine Ladesäule ausgebildet. Insbesondere weist die Ladestation mindestens einen Ladepunkt, insbesondere genau einen Ladepunkt oder genau zwei Ladepunkte, auf.

Insbesondere ist die Ladestation als Schnellladestation ausgebildet. In einer Ausführungsform ist die Ladestation als batteriegestützte Ladestation, insbesondere als batteriegestützte Schnellladestation, ausgebildet.

Gemäß einer Weiterbildung der Erfindung ist vorgesehen, dass die Ladestations-Anordnung mindestens ein Ladekabel aufweist. Das mindestens eine Ladekabel ist über die mindestens eine Ladekabel-Aufnahme, insbesondere die Sattelfläche der mindestens einen Ladekabel-Aufnahme, der Krag-Vorrichtung geführt. Insbesondere ist eine Länge des mindestens einen Ladekabels derart gewählt, dass das mindestens eine Ladekabel bei einer Nichtbenutzung - und somit einer Anordnung in der Ladestecker-Aufhängung - nicht den Boden berührt. Vorzugsweise weist das Ladekabel eine Länge von mindestens 2 m auf.

In einer weiteren Ausgestaltung weist die Ladestation zwei Ladepunkte und damit zwei Ladekabel und zwei Ladekabel-Aufnahmen auf, wobei ein erstes Ladekabel über die eine erste Ladekabel-Aufnahme und ein zweites Ladekabel über eine zweite Ladekabel-Aufnahme geführt werden. Vorteilhafterweise ist es damit in einfacher und komfortabler Weise möglich, zwei Kraftfahrzeuge gleichzeitig und ohne eine vorgeschriebene Ausrichtung der Kraftfahrzeuge relativ zueinander und/oder relativ zu der Ladestation aufzuladen.

Zur Erfindung gehört auch ein Krag-Vorrichtungs-Bausatz, mit mindestes einem Träger, mindestens einer ersten Befestigungsvorrichtung, mindestens einer weiteren Befestigungsvorrichtung und einer Montageanweisung. Dabei enthält die Montageanweisung Informationen dazu, wie die Krag-Vorrichtung bestimmungsgemäß zusammenzubauen und an einer Ladestation zu montieren ist.

Die Erfindung wird im Folgenden anhand der Zeichnung näher erläutert. Dabei zeigen:
- Fig. 1: eine schematische Darstellung eines ersten Ausführungsbeispiels einer Krag-Vorrichtung in einer Seitenansicht,
- Fig. 2: eine schematische Darstellung eines zweiten Ausführungsbeispiels der Krag-Vorrichtung in einer Seitenansicht,
- Fig. 3: eine schematische Darstellung des ersten Ausführungsbeispiels der Krag-Vorrichtung in einer Draufsicht,
- Fig. 4: eine schematische Darstellung eines dritten Ausführungsbeispiels der Krag-Vorrichtung in einer Draufsicht,
- Fig. 5: eine schematische Darstellung eines vierten und fünften Ausführungsbeispiels der Krag-Vorrichtung in einer Draufsicht,
- Fig. 6: eine schematische Darstellung eines sechsten Ausführungsbeispiels der Krag-Vorrichtung in einer Draufsicht,
- Fig. 7: eine schematische Darstellung eines siebten Ausführungsbeispiels der Krag-Vorrichtung in einer Detailansicht, und
- Fig. 8: eine schematische Darstellung des siebten Ausführungsbeispiels der Krag-Vorrichtung in einer Detailansicht.

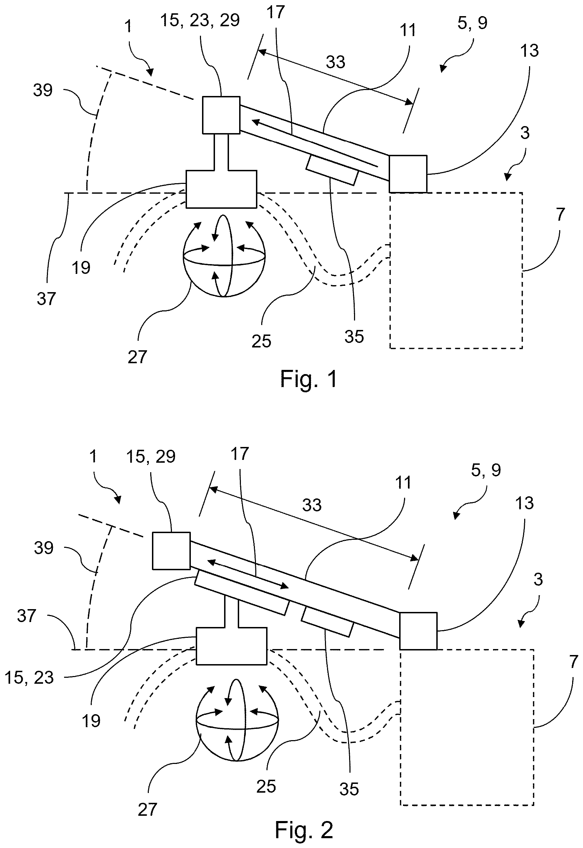

**Figur** 1 zeigt eine schematische Darstellung eines ersten Ausführungsbeispiels einer Krag-Vorrichtung 1 für eine Ladestation 3 in einer Seitenansicht.

Die Krag-Vorrichtung 1 und die Ladestation 3 bilden insbesondere eine Ladestations-Anordnung 5. Alternativ oder zusätzlich bilden die Krag-Vorrichtung 1 und ein Gehäuse 7 der Ladestation 3 eine Gehäuse-Anordnung 9.

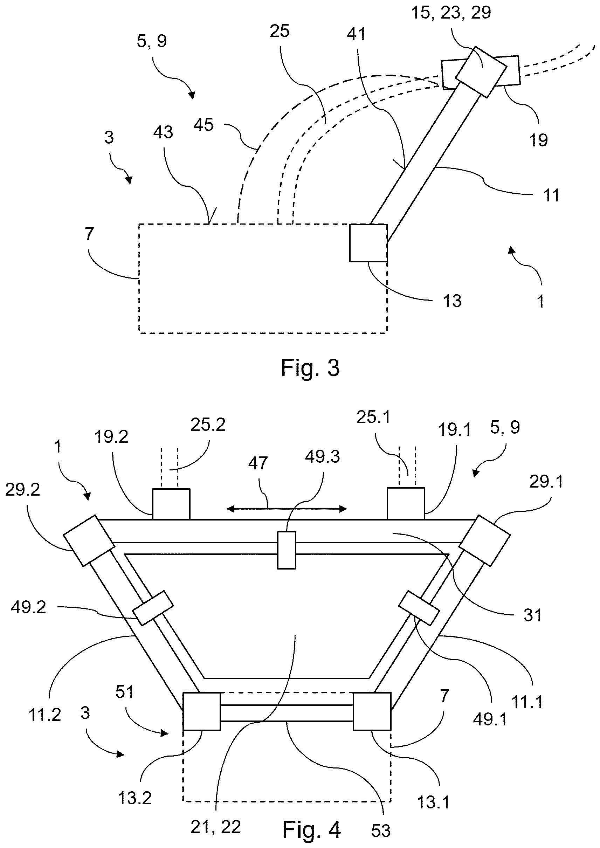

Die Krag-Vorrichtung 1 weist einen Träger 11, eine erste Befestigungsvorrichtung 13 und mindestens eine weitere Befestigungsvorrichtung 15 auf. Der Träger 11 weist einen starren Grundkörper mit einem ersten Ende und einem dem ersten Ende entlang einer Längserstreckung 17 des Trägers 11 gegenüberliegenden zweiten Ende auf. Die erste Befestigungsvorrichtung 13 ist zur starren Befestigung des ersten Endes des Trägers 11 an der Ladestation 3 ausgebildet. Zusätzlich ist die mindestens eine weitere Befestigungsvorrichtung 15 zur beweglichen Befestigung einer Ladekabel-Aufnahme 19 und/oder mindestens eines Dachelements 21 - dargestellt in den Figuren 4, 6 und 7 - ausgebildet.

Optional weist die Krag-Vorrichtung 1 die Ladekabel-Aufnahme 19 auf. Dabei ist die mindestens eine weitere Befestigungsvorrichtung 15 eine zweite Befestigungsvorrichtung 23 zur beweglichen Befestigung der Ladekabel-Aufnahme 19. Insbesondere ist ein Ladekabel 25 der Ladestation 3 über die Ladekabel-Aufnahme 19 geführt.

Besonders bevorzugt sind die Ladekabel-Aufnahme 19 und die zweite Befestigungsvorrichtung 23 derart aufeinander abgestimmt, dass die Ladekabel-Aufnahme 19 um mindestens eine Drehachse drehbar in der Befestigungsvorrichtung gelagert ist. Die Drehbarkeit der Ladekabel-Aufnahme 19 ist anhand der Pfeile 27 dargestellt.

Optional weist der Träger 11 an dem zweiten Ende als die mindestens eine weitere Befestigungsvorrichtung 15 eine dritte Befestigungsvorrichtung 29 zur starren Befestigung einer Querstrebe 31 - dargestellt in den Figuren 4 bis 8 - auf. Insbesondere kann die Querstrebe 31 zur Befestigung eines Dachelements 21 oder der Ladekabel-Aufnahme 19 genutzt werden.

Insbesondere weist der Träger 11 eine Trägerlänge 33 von 80 cm bis 150 cm, vorzugsweise von 100 cm bis 130 cm, besonders bevorzugt von 110 cm, auf.

Optional weist die Krag-Vorrichtung 1 eine Leuchtvorrichtung 35 auf, wobei die Leuchtvorrichtung 35 insbesondere als ein LED-Leuchtband ausgebildet ist. Die Leuchtvorrichtung 35 ist auf einer im bestimmungsgemäß montierten Zustand nach geodätisch unten weisenden Oberfläche des Trägers 11 und/oder der Querstrebe 31 angeordnet. Die Leuchtvorrichtung 35 ist insbesondere derart an dem Träger 11 und/oder der Querstrebe 31 angeordnet, dass von der Leuchtvorrichtung 35 emittiertes Licht geodätisch nach unten abgestrahlt wird.

Besonders bevorzugt schließen der Träger 11 und eine gedachte horizontale Ebene 37 einen Winkel 39 von -30 ° bis 30 °, vorzugsweise 10 °, ein.

**Figur 2** zeigt eine schematische Darstellung eines zweiten Ausführungsbeispiels der Krag-Vorrichtung 1 für die Ladestation 3 in einer Seitenansicht.

Gleiche und funktionsgleiche Elemente sind in allen Figuren mit identischen Bezugszeichen versehen, sodass insofern auf die vorangegangene Beschreibung verwiesen wird.

Im Gegensatz zu dem ersten Ausführungsbeispiel gemäß Figur 1 ist bei dem zweiten Ausführungsbeispiel gemäß Figur 2 die zweite Befestigungsvorrichtung 23 an dem Träger 11 zwischen dem ersten Ende und dem zweite Ende an einem im bestimmungsgemäß befestigten Zustand nach geodätisch unten weisenden Oberfläche des Trägers 11 angeordnet. Alternativ oder zusätzlich zu der drehbaren Befestigung der Ladekabel-Aufnahme 19 ist die zweite Befestigungsvorrichtung 23 zusätzlich derart ausgebildet, dass die Ladekabel-Aufnahme 19 in der Längserstreckung 17 des Trägers 11 verlagerbar ist.

**Figur 3** zeigt eine schematische Darstellung des ersten Ausführungsbeispiels der Krag-Vorrichtung 1 in einer Draufsicht.

Zur übersichtlicheren Darstellung wird auf die Einzeichnung der Bewegungsrichtungen 27, der Längserstreckung 17 des Trägers 11 und der Trägerlänge 33 verzichtet.

Insbesondere schließen eine Träger-Lotrichtungs-Ebene 41 und eine Seitenverkleidungselement-Ebene 43 einen Winkel 45 von 0 ° bis 180 °, vorzugsweise 135 °, ein. Dabei stehen die Träger-Lotrichtungs-Ebene 41 und die Seitenverkleidungselement-Ebene 43 senkrecht auf der Zeichenebene.

**Figur 4** zeigt eine schematische Darstellung eines dritten Ausführungsbeispiels der Krag-Vorrichtung 1 in einer Draufsicht.

Analog zu Figur 3 wird zur übersichtlicheren Darstellung auf die Einzeichnung der Bewegungsrichtungen 27 der Ladekabel-Aufnahme 19, der Längserstreckung 17 der Trägers 11 und der Trägerlänge 33 verzichtet. Weiterhin wird zur übersichtlicheren Darstellung auf die Einzeichnung der Ausrichtung des Trägers 11, insbesondere der Winkel 39 und 45 verzichtet.

Die Krag-Vorrichtung 1 weist einen ersten Träger 11.1 und einen zweiten Träger 11.2 auf, sowie außerdem die Querstrebe 31. Die Querstrebe 31 ist eingerichtet um einenends an einer ersten dritten Befestigungsvorrichtung 29.1 und anderenends an einer zweiten dritten Befestigungsvorrichtung 29.2 befestigt zu werden.

Insbesondere ist der erste Träger 11.1 mittels einer ersten ersten Befestigungsvorrichtung 13.1 starr an einer ersten Position der Ladestation 3 befestigt. Zusätzlich ist der zweite Träger 11.2 mittels einer zweiten ersten Befestigungsvorrichtung 13.2 starr an einer zweiten, von der ersten Position verschiedenen Position der Ladestation 3 befestigt.

Insbesondere sind sowohl der erste Träger 11.1, als auch die Querstrebe starr an der ersten dritten Befestigungsvorrichtung 29.1 angeordnet, sodass der erste Träger 11.1 und die Querstrebe 31 über die erste dritte Befestigungsvorrichtung 29.1 starr miteinander verbunden sind. Alternativ oder zusätzlich sind sowohl der zweite Träger 11.2, als auch die Querstrebe 31 starr an der zweiten dritten Befestigungsvorrichtung 29.2 angeordnet, sodass der zweite Träger 11.2 und die Querstrebe 31 über die zweite dritte Befestigungsvorrichtung 29.2 starr miteinander verbunden sind.

Optional ist eine erste zweite Befestigungsvorrichtung - in der Draufsicht nicht sichtbar - an der Querstrebe 31 angeordnet. Alternativ oder zusätzlich ist eine zweite zweite Befestigungsvorrichtung - in der Draufsicht nicht sichtbar - an der Querstrebe 31 angeordnet. Dabei weist die Krag-Vorrichtung 1 optional eine erste Ladekabel-Aufnahme 19.1 und/oder eine zweite Ladekabel-Aufnahme 19.2 auf. Die erste Ladekabel-Aufnahme 19.1 und/oder die zweite Ladekabel-Aufnahme 19.2 ist in einer Längserstreckung 47 der Querstrebe 31 verlagerbar an der Querstrebe 31, insbesondere über die erste zweite Befestigungsvorrichtung und/oder die zweite zweite Befestigungsvorrichtung, angeordnet. Weiterhin ist insbesondere ein erstes Ladekabel 25.1 und/oder ein zweites Ladekabel 25.2 der Ladestation 3 über die erste Ladekabel-Aufnahme 19.1 und/oder die zweite Ladekabel-Aufnahme 19.2 geführt.

Optional weist die Krag-Vorrichtung zusätzlich ein Dachelement 21 auf. Das Dachelement 21 kann an mindestens einem Element, ausgewählt aus einer Gruppe, bestehend aus dem ersten Träger 11.1, dem zweiten Träger 11.2, der Querstrebe 31, und einer Kombination von mindestens zwei der genannten Elemente, befestigt werden. Weiterhin ist das Dachelement 31 eingerichtet, um einen von dem ersten Träger 11.1, dem zweiten Träger 11.2, der Querstrebe 31 begrenzten Bereich zumindest teilweise zu überdecken.

Insbesondere ist das Dachelement 21 mittels einer ersten vierten Befestigungsvorrichtung 49.1 an dem ersten Träger 11.1 befestigt. Alternativ oder zusätzlich ist das Dachelement 21 mittels einer zweiten vierten Befestigungsvorrichtung 49.2 an dem zweiten Träger 11.2 befestigt. Alternativ oder zusätzlich ist das Dachelement 21 mittels einer dritten vierten Befestigungsvorrichtung 49.3 an der Querstrebe 31 befestigt.

Besonders bevorzugt ist das Dachelement 21 als Photovoltaikmodul 22 ausgebildet.

Optional weist die Krag-Vorrichtung 1 einen Grundrahmen 51 auf, der eingerichtet ist, um in einem Kopfbereich einer Ladestation 1 - vorzugsweise umlaufend - befestigt zu werden. Dabei weist der Grundrahmen 51 die erste Befestigungsvorrichtung 13.1 und eine Basisstrebe 53 auf.

Die eine Basisstrebe ist eingerichtet, um einenends an der ersten ersten Befestigungsvorrichtung 13.1 und anderenends an der zweiten ersten Befestigungsvorrichtung 13.2 befestigt zu werden.

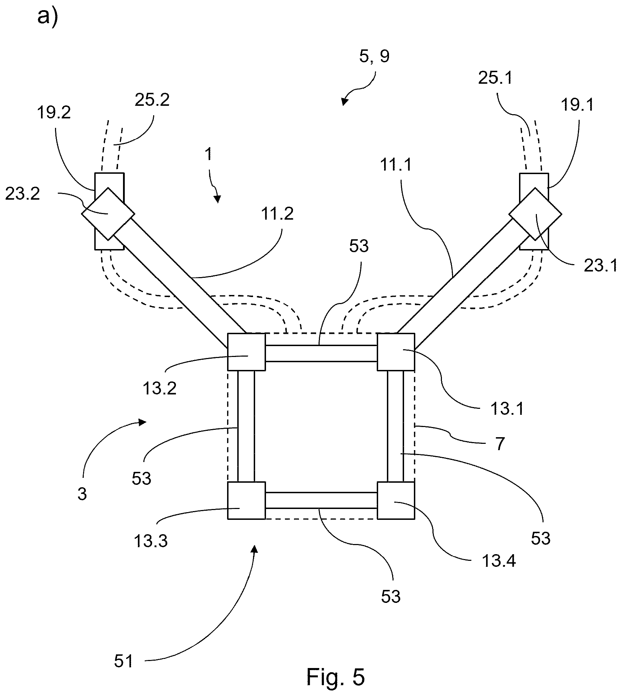

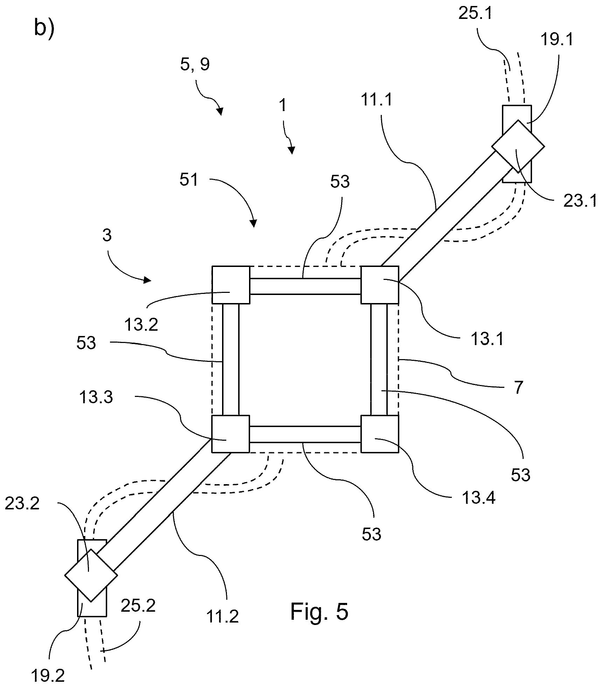

**Figur 5** zeigt eine schematische Darstellung eines vierten und fünften Ausführungsbeispiels der Krag-Vorrichtung 1 in einer Draufsicht.

Analog zu den Figuren 3 und 4 wird zur übersichtlicheren Darstellung auf die Einzeichnung der Bewegungsrichtungen 27 der Ladekabel-Aufnahme 19, der Längserstreckung 17 der Trägers 11 und der Trägerlänge 33 verzichtet. Weiterhin wird, analog zu Figur 4, zur übersichtlicheren Darstellung ebenfalls auf die Einzeichnung der Ausrichtung des Trägers 11, insbesondere der Winkel 39 und 45 verzichtet.

Der Grundrahmen 51 der Krag-Vorrichtung 1 weist die erste erste Befestigungsvorrichtung 13.1, die zweite erste Befestigungsvorrichtung 13.2, eine dritte erste Befestigungsvorrichtung 13.3, eine vierte erste Befestigungsvorrichtung 13.4, eine vier Basisstreben 53 auf.

Dabei ist in den Figuren 5 a) und 5 b) der erste Träger 11.1 starr mit der ersten ersten Befestigungsvorrichtung 13.1 verbunden. Weiterhin ist in Figur 5 a) der zweite Träger 11.2 starr mit der zweiten ersten Befestigungsvorrichtung 13.2 verbunden. In Figur 5 b) ist der zweite Träger 11.2 starr mit der dritten ersten Befestigungsvorrichtung 13.3 verbunden.

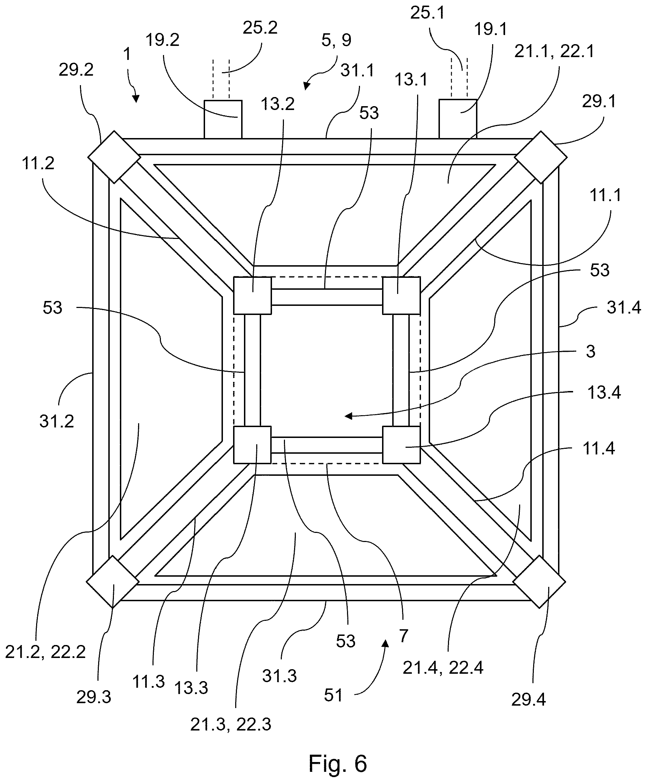

**Figur 6** zeigt eine schematische Darstellung eines sechsten Ausführungsbeispiels der Krag-Vorrichtung 1 in einer Draufsicht.

Analog zu den Figuren 3, 4 und 5 wird zur übersichtlicheren Darstellung auf die Einzeichnung der Bewegungsrichtungen 27 der Ladekabel-Aufnahme 19, der Längserstreckung 17 der Trägers 11 und der Trägerlänge 33 verzichtet. Weiterhin wird, analog zu den Figuren 4 und 5, zur übersichtlicheren Darstellung ebenfalls auf die Einzeichnung der Ausrichtung des Trägers 11, insbesondere der Winkel 39 und 45 verzichtet. Darüber hinaus wird ebenfalls zur übersichtlicheren Darstellung auf die Einzeichnung der vierten Befestigungsvorrichtungen 49 zur Befestigung der Dachelemente 21, insbesondere der Photovoltaikmodule 22 verzichtet.

Die Krag-Vorrichtung 1 weist den ersten Träger 11.1, den zweiten Träger 11.2, einen dritten Träger 11.3 und einen vierten Träger 11.4 auf. Dabei ist der erste Träger 11.1 starr mit der ersten ersten Befestigungsvorrichtung 13.1 verbunden. Weiterhin ist der zweite Träger 11.2 starr mit der zweiten ersten Befestigungsvorrichtung 13.2 verbunden. Zusätzlich ist der dritte Träger 11.3 starr mit der dritten ersten Befestigungsvorrichtung 13.3 verbunden. Und der vierte Träger 11.4 ist starr mit der vierten ersten Befestigungsvorrichtung 13.4 verbunden.

Weiterhin sind der erste Träger 11.1 und der zweite Träger 11.2 über eine erste Querstrebe 31.1, die erste dritte Befestigungsvorrichtung 29.1 und die zweite dritte Befestigungsvorrichtung 29.2 starr miteinander verbunden. Der zweite Träger 11.2 und der dritte Träger 11.3 sind über eine zweite Querstrebe 31.2, die zweite dritte Befestigungsvorrichtung 29.2 und eine dritte dritte Befestigungsvorrichtung 29.3 starr miteinander verbunden. Zusätzlich sind der dritte Träger 11.3 und der vierte Träger 11.4 über eine dritte Querstrebe 31.3, die dritte dritte Befestigungsvorrichtung 29.3 und eine vierte dritte Befestigungsvorrichtung 29.4 starr miteinander verbunden. Darüber hinaus sind der vierte Träger 11.4 und der erste Träger 11.4 über eine vierte Querstrebe 31.4, die vierte dritte Befestigungsvorrichtung 29.4 und die erste dritte Befestigungsvorrichtung 29.1 starr miteinander verbunden.

Optional weist die Krag-Vorrichtung 1 ein erstes Dachelement 21.1, insbesondere ein erstes Photovoltaikmodul 22.1 auf, wobei das erste Dachelement 21.1 über mindestens eine vierte Befestigungsvorrichtung 49 mit dem ersten Träger 11.1, dem zweiten Träger 11.2 und/oder der ersten Querstrebe 31.1 verbunden ist. Alternativ oder zusätzlich weist die Krag-Vorrichtung 1 ein zweites Dachelement 21.2, insbesondere ein zweites Photovoltaikmodul 22.2 auf, wobei das zweite Dachelement 21.2 über mindestens eine vierte Befestigungsvorrichtung 49 mit dem zweiten Träger 11.2, dem dritten Träger 11.3 und/oder der zweiten Querstrebe 31.2 verbunden ist. Alternativ oder zusätzlich weist die Krag-Vorrichtung 1 ein drittes Dachelement 21.3, insbesondere ein drittes Photovoltaikmodul 22.3 auf, wobei das dritte Dachelement 21.3 über mindestens eine vierte Befestigungsvorrichtung 49 mit dem dritten Träger 11.3, dem vierten Träger 11.4 und/oder der dritten Querstrebe 31.3 verbunden ist. Alternativ oder zusätzlich weist die Krag-Vorrichtung 1 ein viertes Dachelement 21.4, insbesondere ein viertes Photovoltaikmodul 22.4 auf, wobei das vierte Dachelement 21.4 über mindestens eine vierte Befestigungsvorrichtung 49 mit dem ersten Träger 11.1, dem vierten Träger 11.4 und/oder der vierten Querstrebe 31.4 verbunden ist.

Optional sind die erste Ladekabel-Aufnahme 19.1 und die zweite Ladekabel-Aufnahme 19.2 an der ersten Querstrebe 31.1 angeordnet. Alternativ ist die erste Ladekabel-Aufnahme 19.1 an der ersten Querstrebe 31.1 angeordnet und die zweite Ladekabel-Aufnahme 19.2 ist an der zweiten Querstreben 31.2 angeordnet. Alternativ ist die erste Ladekabel-Aufnahme 19.1 an der ersten Querstrebe 31.1 angeordnet und die zweite Ladekabel-Aufnahme 19.2 ist an der dritten Querstreben 31.3 angeordnet.

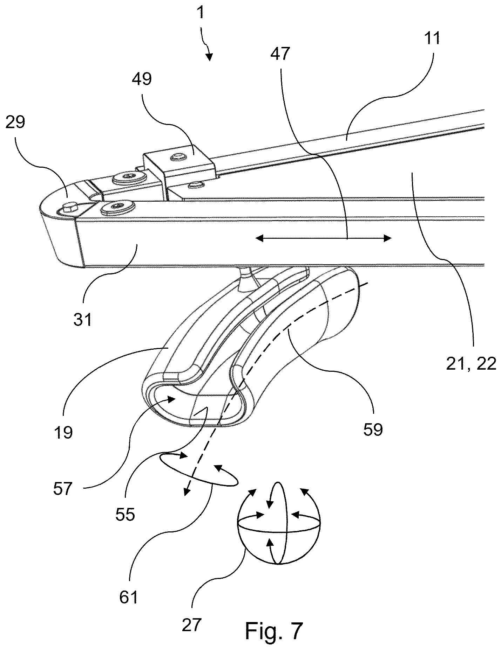

**Figur 7** zeigt eine schematische Darstellung eines siebten Ausführungsbeispiels der Krag-Vorrichtung 1 in einer Detailansicht mit Blickrichtung nach schräg unten.

Die Ladekabel-Aufnahme 19 ist analog zu Figur 4 an der Querstrebe 31 angeordnet. Dabei ist die Ladekabel-Aufnahme 19 entlang der Längserstreckung 47 der Querstrebe 31 verlagerbar an der Querstrebe angeordnet. Alternativ oder zusätzlich ist die Ladekabel-Aufnahme 19 drehbar um mindestens eine Drehachse an der Querstrebe 31 angeordnet, dargestellt durch die Pfeile 27.

Eine im bestimmungsgemäß befestigten Zustand nach geodätisch oben weisende Oberfläche 55 der Ladekabel-Aufnahme 19 ist zumindest bereichsweise als Sattelfläche ausgebildet. Zusätzlich bildet die Ladekabel-Aufnahme 19 einen Ladekabel-Kanal 57 aus, wobei die Ladekabel-Aufnahme 19 den Ladekabel-Kanal 57 entlang einer eine Erstreckungsrichtung 59 des Ladekabels 25 - hier nicht dargestellt - umgreifenden Kabelumfangsrichtung 61 nicht vollständig umschließt. Insbesondere ist damit die Ladekabel-Aufnahme 19 an einer Seite entlang der Erstreckungsrichtung 59 des Ladekabels 25 offen, sodass das Ladekabel 25 einfach eingelegt werden kann.

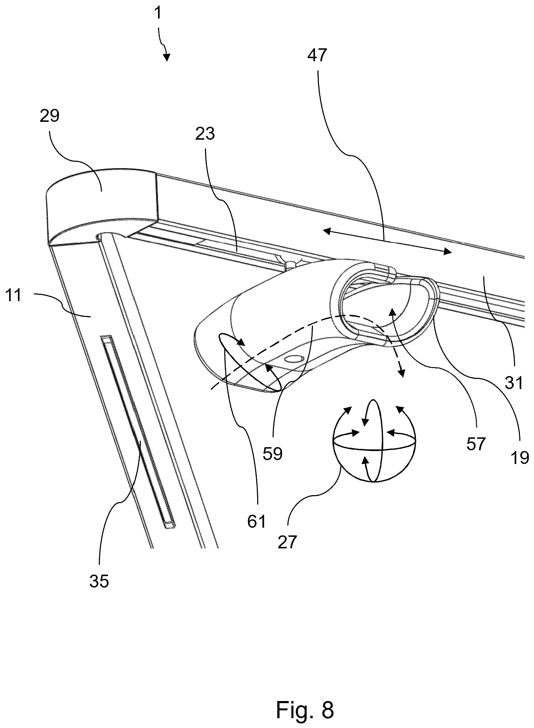

**Figur 8** zeigt eine schematische Darstellung des siebten Ausführungsbeispiels der Krag-Vorrichtung 1 in einer weiteren Detailansicht mit Blickrichtung nach schräg oben.

Hierbei ist das optionale Dachelement 21 nicht dargestellt.

Die zweite Befestigungsvorrichtung 23 ist als Nut und/oder Schiene an einer geodätisch nach unten weisenden Oberfläche der Querstrebe 31 ausgebildet. Damit ist die Ladekabel-Aufnahme 19 in der Längserstreckung 47 der Querstrebe 31 verlagerbar.

## Patentansprüche

1. Krag-Vorrichtung (1) für eine Ladestation (3) mit mindestens einem Träger (11, 11.1, 11.2, 11.3, 11.4), wobei
- der mindestens eine Träger (11, 11.1, 11.2, 11.3, 11.4) einen starren Grundkörper mit einem ersten Ende und einem dem ersten Ende entlang einer Längserstreckung (17) des mindestens eine Trägers (11, 11.1, 11.2, 11.3, 11.4) gegenüberliegenden zweiten Ende aufweist, wobei
- die Krag-Vorrichtung (1) eine erste Befestigungsvorrichtung (13, 13.1, 13.2, 13.3, 13.4) zur starren Befestigung des ersten Endes des mindestens einen Trägers (11, 11.1, 11.2, 11.3, 11.4) an der Ladestation (3) aufweist, wobei
- die Krag-Vorrichtung (1) mindestens eine weitere Befestigungsvorrichtung (23, 23.1, 23.2, 29, 29.1, 29.2, 29.3, 29.4) zur beweglichen Befestigung mindestens einer Ladekabel-Aufnahme (19, 19.1, 19.2) und/oder mindestens eines Dachelements (21, 21.1, 21.2, 21.3, 21.4) aufweist.

2. Krag-Vorrichtung (1) nach Anspruch 1, wobei die Krag-Vorrichtung (1) mindestens eine Ladekabel-Aufnahme (19, 19.1, 19.2) aufweist, und wobei die mindestens eine weitere Befestigungsvorrichtung (23, 23.1, 23.2, 29, 29.1, 29.2, 29.3, 29.4, 49, 49.1, 49.2, 49.3) eine zweite Befestigungsvorrichtung (23, 23.1, 23.2) zur beweglichen Befestigung der mindestens einen Ladekabel-Aufnahme (19, 19.1, 19.2) ist.

3. Krag-Vorrichtung (1) nach einem der vorhergehenden Ansprüche, wobei der mindestens eine Träger (11, 11.1, 11.2, 11.3, 11.4) an dem zweiten Ende als die mindestens eine weitere Befestigungsvorrichtung (23, 23.1, 23.2, 29, 29.1, 29.2, 29.3, 29.4, 49, 49.1, 49.2, 49.3) eine dritte Befestigungsvorrichtung (29, 29.1, 29.2, 29.3, 29.4) zur starren Befestigung einer Querstrebe (31, 31.1, 31.2, 31.3, 31.4) aufweist.

4. Krag-Vorrichtung (1) nach einem der vorhergehenden Ansprüche, wobei der mindestens eine Träger (11, 11.1, 11.2, 11.3, 11.4) zumindest bereichsweise als längliches Konstruktionsprofil, oder als U-Profil, oder als L-Profil, oder als T-Träger oder als Doppel-T-Träger ausgebildet ist.

5. Krag-Vorrichtung (1) nach einem der vorhergehenden Ansprüche, wobei die Krag-Vorrichtung (1) als den mindestens einen Träger (11, 11.1, 11.2, 11.3, 11.4) einen ersten Träger (11.1) und einen zweiten Träger (11.2) aufweist, sowie außerdem mindestes eine Querstrebe (31, 31.1, 31.2, 31.3, 31.4), die eingerichtet ist, um einenends an der dritten Befestigungsvorrichtung (29, 29.1, 29.2, 29.3, 29.4) des ersten Trägers (11.1) und anderenends an der dritten Befestigungsvorrichtung (29, 29.1, 29.2, 29.3, 29.4) des zweiten Trägers (11.2) befestigt zu werden.

6. Krag-Vorrichtung (1) nach einem der vorhergehenden Ansprüche, wobei die mindestens eine weitere Befestigungsvorrichtung (23, 23.1, 23.2, 29, 29.1, 29.2, 29.3, 29.4, 49, 49.1, 49.2, 49.3) an dem mindestens einen Träger (11, 11.1, 11.2, 11.3, 11.4) und/oder an der mindestens einen Querstrebe (31, 31.1, 31.2, 31.3, 31.4) angeordnet ist.

7. Krag-Vorrichtung (1) nach Anspruch 5 oder 6, wobei die mindestens eine Ladekabel-Aufnahme (19, 19.1, 19.2) in einer Längserstreckung (47) der mindestens einen Querstrebe (31, 31.1, 31.2, 31.3, 31.4) verlagerbar an der mindestens einen Querstrebe (31, 31.1, 31.2, 31.3, 31.4) angeordnet ist.

8. Krag-Vorrichtung (1) nach einem der Ansprüche 5 bis 7 mit mindestens einem Dachelement (21, 21.1, 21.2, 21.3, 21.4), wobei das Dachelement (21, 21.1, 21.2, 21.3, 21.4) - insbesondere mittels einer vierten Befestigungsvorrichtung (49, 49.1, 49.2, 49.3) als der mindestens einen weiteren Befestigungsvorrichtung (23, 23.1, 23.2, 29, 29.1, 29.2, 29.3, 29.4, 49, 49.1, 49.2, 49.3) - an mindestens einem Element, ausgewählt aus einer Gruppe, bestehend aus dem ersten Träger (11.1), dem zweiten Träger (11.2), der Querstrebe (31, 31.1, 31.2, 31.3, 31.4), und einer Kombination von mindestens zwei der genannten Elemente, befestigt werden kann, und wobei das mindestens eine Dachelement (21, 21.1, 21.2, 21.3, 21.4) eingerichtet ist, um einen von den mindestens zwei Trägern (11, 11.1, 11.2) und der mindestens einen Querstrebe (31, 31.1, 31.2, 31.3, 31.4) begrenzten Bereich zumindest teilweise zu überdecken.

9. Krag-Vorrichtung (1) nach Anspruch 8, wobei das mindestens einem Dachelement (21, 21.1, 21.2, 21.3, 21.4) als Photovoltaikmodul (22, 22.1, 22.2, 22.3, 22.4) ausgebildet ist.

10. Krag-Vorrichtung (1) nach einen der vorhergehenden Ansprüche, mit einem Grundrahmen (51), der eingerichtet ist, um in einem Kopfbereich einer Ladestation (3) - vorzugsweise umlaufend - befestigt zu werden, wobei der Grundrahmen (51) die erste Befestigungsvorrichtung (13, 13.1, 13.2, 13.3, 13.4) aufweist, sowie mindestens eine Basisstrebe (53), die eingerichtet ist, um einenends an einer ersten ersten Befestigungsvorrichtung (13.1) zur Befestigung des ersten Trägers (11.1) und anderenends an einer zweiten ersten Befestigungsvorrichtung (13.2) zur Befestigung des zweiten Trägers (11.2) befestigt zu werden.

11. Krag-Vorrichtung (1) nach einem der vorhergehenden Ansprüche, wobei eine im bestimmungsgemäß befestigten Zustand nach oben weisende Oberfläche (55) der mindestens einen Ladekabel-Aufnahme (19, 19.1, 19.2) zumindest bereichsweise als Sattelfläche ausgebildet ist.

12. Krag-Vorrichtung (1) nach einem der vorhergehenden Ansprüche, wobei die mindestens einen Ladekabel-Aufnahme (19, 19.1, 19.2) einen Ladekabel-Kanal (57) ausbildet, wobei die mindestens einen Ladekabel-Aufnahme (19, 19.1, 19.2) den Ladekabel-Kanal (57) entlang einer Erstreckungsrichtung (59) des Ladekabels (25, 25.1, 25.2) umgreifenden Kabelumfangsrichtung (61) nicht vollständig umgreift.

13. Krag-Vorrichtung (1) nach einem der vorhergehenden Ansprüche, wobei der mindestens eine Träger (11, 11.1, 11.2, 11.3, 11.4) eine Trägerlänge (33) von 80 cm bis 150 cm, insbesondere von 100 cm bis 130 cm, aufweist.

14. Krag-Vorrichtung (1) nach einem der vorhergehenden Ansprüche mit mindestens einer Leuchtvorrichtung (35), insbesondere einem LED-Leuchtband, wobei die Leuchtvorrichtung (35) auf einer im bestimmungsgemäß montierten Zustand nach unten weisenden Oberfläche des mindestens einen Trägers (11, 11.1, 11.2, 11.3, 11.4) und/oder der mindestens einen Querstrebe (31, 31.1, 31.2, 31.3, 31.4) angeordnet ist.

15. Gehäuse-Anordnung (9) für eine Ladestation (3) mit einem Gehäuse (7) und einer Krag-Vorrichtung (1) nach einem der vorhergehenden Ansprüche, wobei der mindestens eine Träger (11, 11.1, 11.2, 11.3, 11.4) über die erste Befestigungsvorrichtung (13, 13.1, 13.2, 13.3, 13.4) starr an einem Verkleidungselement des Gehäuses (7) befestigt ist.

16. Gehäuse-Anordnung (9) nach Anspruch 15, wobei der mindestens eine Träger (11, 11.1, 11.2, 11.3, 11.4) mit einer gedachten horizontalen Ebene (37) einen Winkel (39) von -30 ° bis 30 °, vorzugsweise 10 °, einschließt.

17. Gehäuse-Anordnung (9) nach Anspruch 15 oder 16, wobei eine Träger-Lotrichtungs-Ebene (41) und eine Seitenverkleidungselement-Ebene (43) einen Winkel (45) von 0° bis 180°, vorzugsweise 135 °, einschließen.

18. Ladestations-Anordnung (5) mit einer Ladestation (3) und einer Krag-Vorrichtung (1) nach einem der Ansprüche 1 bis 14 oder einer Gehäuse-Anordnung (9) nach einem der Ansprüche 15 bis 17.

19. Ladestations-Anordnung (5) nach Anspruch 18 mit mindestens einem Ladekabel (25, 25.1, 25.2), wobei das mindestens eine Ladekabel (25, 25.1, 25.2) über die mindestens eine Ladekabel-Aufnahme (19, 19.1, 19,2) der Krag-Vorrichtung (1) geführt ist.
